# EUROPÄISCHE PATENTSCHRIFT

(11) **EP 0 806 260 B1**
(45) Veröffentlichungstag und Bekanntmachung des Hinweises auf die Patenterteilung: **13.02.2002**
(21) Anmeldenummer: 97107283.0
(22) Anmeldetag: 02.05.1997
(51) Int. Cl.: B23C 3/04, A46B 13/00

(54) **Verfahren zum Entfernen von gebrauchten elastomeren Bezügen von Walzen sowie Vorrichtung zur Durchführung desselben**
Method and apparatus for removing a worn elastomer coating from a cylinder
Procédé et dispositif pour retirer le revêtement élastomère usagé d'un cylindre

(30) Priorität: 09.05.1996 DE 19618613
(43) Veröffentlichungstag der Anmeldung: 12.11.1997
(73) Patentinhaber: FELIX BÖTTCHER GmbH & Co., D-50933 Köln (DE)
(72) Erfinder: Frohwein, Axel, 50937 Köln (DE)
(74) Vertreter: Werner, Hans-Karsten, Dr.Dipl.-Chem.

(56) Entgegenhaltungen:
- EP-A- 0 625 406
- DE-A- 2 944 199
- US-A- 2 011 585
- US-A- 2 398 763
- US-A- 3 442 166
- US-A- 5 443 411

## Beschreibung

Gegenstand der vorliegenden Erfindung ist ein Verfahren zum Entfernen von gebrauchten elastomeren Bezügen von Walzen sowie eine Vorrichtung zur Durchführung dieses Verfahrens.

Gebrauchte elastomere Bezüge von Walzen sind bisher entfernt worden entweder durch Abbrennen oder durch Abdrehen (z. Bsp. gemäß DE 2 944 199 A1). Das Abbrennen ist verbunden mit Schadstoffemissionen. Wegen der beim Abbrennen entstehenden Wärmeentwicklung ist es nötig, die Kerne anzubohren und zu verstiften. Dabei kann es trotzdem zu Überhitzungen und damit zu einem Verzug der Kerne kommen. Auch können gelegentlich die Zapfen ausglühen. Die nach dem Abbrennen verbleibenden Altgummischläuche sind nur sehr kostenaufwendig entsorgbar. Insgesamt erfordert das Abbrennen relativ hohe Mengen an Energie.

Beim Abdrehen gebrauchter elastomerer Bezüge von Walzen entstehen Fließspäne, die nur schwierig zu entsorgen sind. Die langen Fließspäne erhöhen erfahrungsgemäß das Unfallrisiko. Bei der Entfernung von gebrauchten elastomeren Bezügen durch Abdrehen ist weiterhin nicht zu vermeiden, daß gegen Ende stets auch die oberste Schicht des Kerns abgetragen wird. Dieses Verfahren ist somit stets mit einem gewissen Durchmesserverschleiß verbunden.

Die DE-OS 22 48 853 beschreibt ein Arbeitsverfahren zur Vorbereitung von abgefahrenen Kraftfahrzeugreifen zur Runderneuerung, bei dem der Restgummi vom Reifen mit einem rotierenden Messer abgeschnitzelt wird, wobei die Schneide des Messers vorzugsweise gerillt ist. Die Rillen in der Schneide sind vorzugsweise konisch eingeschliffen. Diese Messer werden vorzugsweise in einem Fräskopf eingesetzt. Es entsteht dabei eine schuppenartige Oberfläche, welche mit dem zur Erneuerung aufgebrachten Rohmaterial eine besonders innige Bindung eingeht.

Die US-PS 2,265,643 beschreibt ein Schneidewerkzeug zum Abraspeln der Oberfläche von Gummireifen, die runderneuert werden sollen. Mit diesem Werkzeug soll eine glatte Oberfläche geschaffen werden, auf der dann die Runderneuerung stattfindet.

Die US-PS 1,971,428 beschreibt ein Werkzeug, mit welchem überschüssiges Gummi von geschwollenen Druckrollen entfernt werden soll. Auch hiermit werden nur relativ dünne Schichten vom Gummibelag entfernt, um wieder eine glatte Oberfläche zu schaffen.

Die US-PS 1,718,793 beschreibt eine Vorrichtung, mit der Gummiflächen aufgerauht werden sollen, die anschließend miteinander verklebt werden sollen, um den inneren Schlauch von Autoreifen zu bilden. Dem gleichen Zweck dienen Verfahren und Vorrichtung zur Herstellung eines Schlauches gemäß DE-OS 14 79 623. Es wird eine dünne Schicht entfernt, um eine rauhere Oberfläche zu erhalten.

Die US-PS 2,398,763 beschreibt eine Schneidevorrichtung für weichen Gummi, Baumwolle und Filz mit loser Textur oder faseriger Zusammensetzung. Diese rotierende Schneidemaschine weist eine besondere Gestaltung der Schneidezähne auf. Figuren 6 und 7 zeigen die Herstellung einer länglichen Kerbe oder die Entfernung der äußeren Schicht einer Walze auf einen geringeren Durchmesser. Geschnitten wird mit Hilfe eines sehr speziell und kompliziert geschliffenen Sägeblattes, welches rasch stumpf wird und nur mit großem Aufwand wieder nachgeschliffen werden kann. Dieses Gerät ist nicht geeignet, die relativ harten aber elastischen Elastomerschichten von gebrauchten Walzen zu entfernen. In der Praxis wurden daher die gebrauchten Elastomerbezüge von Walzen entweder durch Abbrennen oder durch Abdrehen entfernt.

Sowohl das Abdrehen wie das Abbrennen ist zeitlich aufwendig und deshalb mit relativ hohen Kosten verbunden.

Die Erfindung hat sich die Aufgabe gestellt, das Verfahren zum Entfernen von gebrauchten elastomeren Bezügen von Walzen dahingehend zu verbessern, daß es wirtschaftlicher, sicherer, umweltfreundlicher und letztendlich einfacher und schneller durchführbar wird.

Diese Aufgabe wurde jetzt gelöst dadurch, daß an ein Ende des Bezuges der rotierenden Walzen bis dicht an den Walzenkern ein rotierender Messerkopf herangeführt wird, der mehrere an einem Wendeplattenhalter montierte Schneidwerkzeuge aufweist und dieser Messerkopf an der rotierenden Walze entlanggeführt wird bis zum anderen Ende des Bezuges, wobei Umfangsgeschwindigkeiten der Schneidwerkzeuge von 15 bis 70 m/s, vorzugsweise 40 bis 50 m/s zum Einsatz kommen.

Sofern es sich um Elastomere handelt mit einer Shore A Härte von mehr als 90, werden die Schneidwerkzeuge mit Drehstählen ausgerüstet. Sofern es sich um Elastomere mit einer Shore A Härte bis ca. 90 handelt, haben sich Ringstähle hervorragend bewährt. Bei beiden Verfahrensvarianten entstehen anstelle von Spänen kleine Teile mit annähernd gleicher Größe. Bei Verwendung von Drehstählen entstehen Chip-ähnliche Teilchen. Bei den erfindungsgemäß eingesetzten hohen Schnittgeschwindigkeiten verhalten sich die gebrauchten elastomeren Bezüge nicht mehr wie Elastomere, sondern wie gut schneidbare Materialien wie Holz oder Kunststoffe. Diese Verhaltensweise war bisher nur beobachtet und angewendet worden bei der Oberflächenbearbeitung von Elastomeren gemäß EP-A1-0 625 406.

Bei diesem Verfahren werden aber nur sehr dünne Schichten der Oberfläche entfernt. Es war nicht vorherzusehen, daß mit entsprechend höherer Energiezufuhr und entsprechend anderen Werkzeugen wie Ringstählen oder Drehstählen in einem Arbeitsgang der gesamte gebrauchte elastomere Bezug von Walzen entfernt werden kann, wobei es nicht einmal zur Beschädigung oder Verschleißerscheinungen des Walzenkernes kommt.

Um einen Durchmesserverschleiß am Kern mit Sicherheit zu vermeiden und die Lebensdauer der Schneidwerkzeuge am rotierenden Messerkopf zu verlängern, wird dieser nur bis dicht an den Walzenkern herangeführt. Es verbleibt somit eine dünne restliche Schicht der gebrauchten elastomeren Bezüge auf dem Walzenkern. Dieser wird vorzugsweise entfernt mit einer oder mehreren nebeneinanderliegenden rotierenden Scheibenrundbürsten mit gezopften Stahldrähten. Diese Scheibenrundbürste wird dabei nach hinten versetzt aber gleichzeitig mit dem rotierenden Messerkopf an der rotierenden Walze entlanggeführt. Dabei wird der verbliebene Rest der elastomeren Bezüge in Form von Staub entfernt. Der Walzenkern wird dabei jedoch nicht beschädigt oder wie beim Abdrehen teilweise abgetragen.

Ein weiterer Vorteil des erfindungsgemäßen Verfahrens besteht darin, daß die aus den elastomeren Bezügen durch Schneiden entstehenden Teilchen und der durch das Nachbürsten entstehende Staub abgesaugt werden können. Es handelt sich dabei um leicht zu lagernde, zu transportierende und zu entsorgende Teilchen, die gegebenenfalls sogar einer Wiederverwendung als Altgummimehl zugeführt werden können.

Ein weiterer Vorteil des erfindungsgemäßen Verfahrens besteht darin, daß der rotierende Messerkopf nach Beendigung der Bearbeitung einer Walze die Bearbeitung der nächsten Walze in entgegengesetzter Richtung vornehmen kann. Es ist somit nicht nötig, den rotierenden Messerkopf und die rotierende Scheibenrundbürste in die Ausgangspositionen zurückzufahren.

Es ist vielmehr nur nötig, die Position der rotierenden Scheibenrundbürste gegenüber dem rotierenden Messerkopf zu versetzen, so daß bei der Bearbeitung der nächsten Walze in der entgegengesetzten Richtung wiederum die rotierende Scheibenrundbürste nach hinten versetzt aber gleichzeitig mit dem rotierenden Messerkopf an der nächsten rotierenden Walze entlanggeführt werden kann.

Die Vorrichtung zur Durchführung des erfindungsgemäßen Verfahrens besteht aus
a) einer Werkzeugmaschine zum Einspannen und Rotieren der Walzen mit einem Support zum Vorschub und Anstellen des Schneidwerkzeugs
b) einem rotierenden Messerkopf mit einem Wendeplattenhalter und einem eigenen Antrieb für den Messerkopf.

Der Wendeplattenhalter wird je nach Härte des gebrauchten elastomeren Bezuges entweder mit Drehstählen oder mit Ringstählen ausgerüstet. Da die überwiegende Anzahl der Walzen mit elastomeren Bezügen ausgestattet sind bis ca. 90 Shore A, werden überwiegend Ringstähle eingesetzt. Da die meisten elastomeren Bezüge nur Stärken bis zu 25 mm aufweisen, kann erfindungsgemäß mit Ringstählen gearbeitet werden mit einem Durchmesser von 50 mm. Mit diesen Ringstählen können Bezugstärken bis zu 25 mm in einem Arbeitsgang entfernt werden. Der rotierende Messerkopf erzeugt dabei Umfangsgeschwindigkeiten von 15 bis 70, vorzugsweise 40 bis 50 m/s. Bei diesen hohen Schnittgeschwindigkeiten verhalten sich die gebrauchten elastomeren Bezüge wie nicht elastomere, aber gut schneidbare Materialien wie z.B. Holz und gut schneidbare Kunststoffe. Bei elastomeren Bezügen mit über ca. 90 Shore A sind die Ringstähle nicht mehr einsetzbar, so daß man übliche Drehstähle anwenden muß. Wendeplattenhalter sind prinzipiell so ausrüstbar, daß die Drehstähle in beiden Arbeitsrichtungen eingesetzt werden können. Es ist somit auch bei dieser Verfahrensweise möglich, eine Walze auf dem Hinweg und die nächste Walze auf dem Rückweg zu bearbeiten.

Übliche Wendeplattenhalter besitzen mindestens zwei, meist aber mehr Schneiden. Vorzugsweise wird erfindungsgemäß mit Wendeplattenhaltern gearbeitet, die vier Schneidwerkzeuge aufnehmen können.

Zur Entfernung der auf dem Walzenkern verbliebenen Reste der elastomeren Bezüge wird dieser vorzugsweise mit einer oder mehreren nebeneinanderliegenden rotierenden Rundbürsten mit gezopften Stahldrähten entfernt. Dazu weist die erfindungsgemäße Vorrichtung zusätzlich auf
c) einen weiteren Support zum Vorschub und zum Anstellen einer rotierenden Scheibenrundbürste mit einem eigenen Antrieb.

Auch diese Bürsten werden vorzugsweise so ausgestaltet, daß sie mit Umfangsgeschwindigkeiten von 15 bis 70, vorzugsweise 40 bis 50 m/s arbeiten. Handelsübliche Scheibenrundbürsten sind nicht breit genug, mit gleicher Arbeitsgeschwindigkeit wie der rotierende Messerkopf den Rest der verbleibenden elastomeren Bezüge vom Walzenkern zu entfernen. Vorzugsweise werden daher mehrere derartiger Bürsten nebeneinander montiert, so daß eine Wirkbreite von 1 bis 2 cm entsteht.

Weiterhin wurde festgestellt, daß die Wirksamkeit und die Lebensdauer der Scheibenrundbürsten deutlich verbessert werden können, wenn die Zöpfe der Stahldrähte mit einem elastischen Kunststoff verklebt sind. Besonders bewährt haben sich hierfür Polyurethane, Heißschmelzkleber und thermoplastische Blockcopolymere. Diese Verklebung mit einem elastischen Kunststoff erhöht einerseits die Steifigkeit der gezopften Stahldrähte und erhöht somit die Aggressivität der Bürste. Andererseits verbleibt dem Zopf eine gewisse Restelastizität, so daß der Walzenkern nicht durch die Stahlbürste beschädigt wird, wie dies durch zu kurze und zu starre Stahldrähte der Fall sein könnte. Diese mit einem elastischen Kunststoff verklebten Zöpfe der Stahldrähte und daraus hergestellten Scheibenrundbürsten sind Gegenstand des deutschen Gebrauchsmusters 296 08 399.2.

Eine typische und bevorzugte Ausführungsform der erfindungsgemäßen Vorrichtung ist in den anliegenden Figuren näher erläutert.

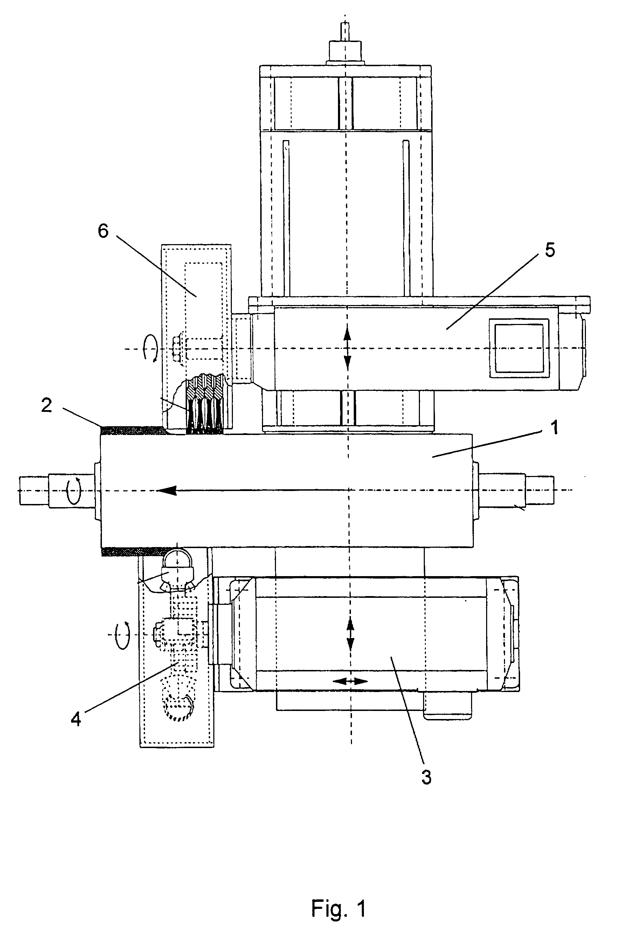

Figur 1 ist eine bevorzugte Ausgestaltung der erfindungsgemäßen Vorrichtung in der Draufsicht.

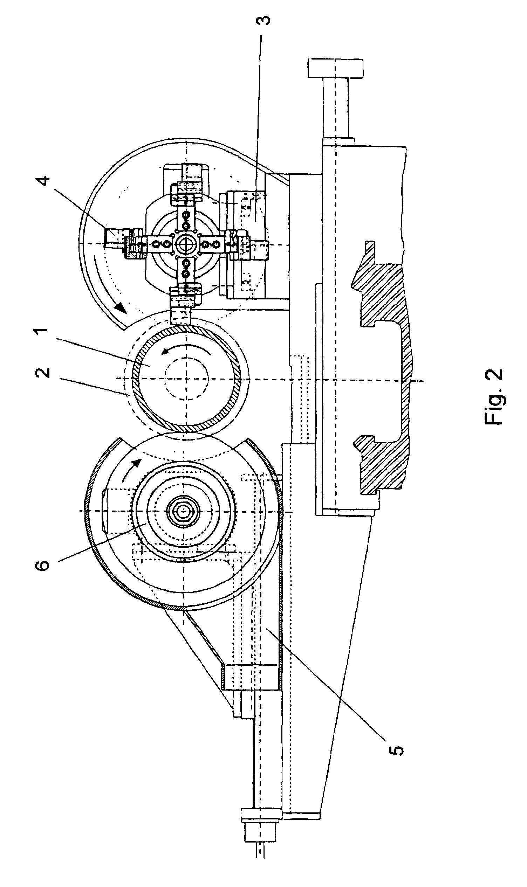

Figur 2 ist ein Querschnitt durch diese Vorrichtung.

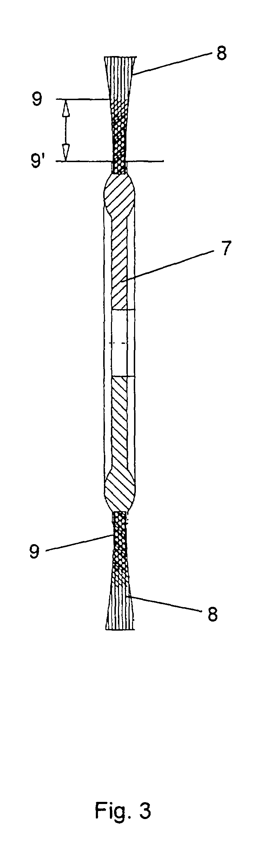

Figur 3 ist ein Schnitt durch eine Scheibenrundbürste.

In den Figuren bedeutet
1 der Walzenkern;
2 der zu entfernende gebrauchte elastomere Bezug auf der Walze;
3 der Support für das Schneidwerkzeug;
4 ein rotierender Messerkopf mit Wendeplattenhalter;
5 ein Support für eine rotierende Scheibenrundbürste;
6 eine Scheibenrundbürste;
7 die Scheibe der Scheibenrundbürste;
8 gezopfte Stahldrähte;
9 mit elastischem Kunststoff verklebter Bereich der gezopften Stahldrähte.

## Patentansprüche

1. Verfahren zum Entfernen von gebrauchten elastomeren Bezügen von Walzen, **dadurch gekennzeichnet, daß** an ein Ende des Bezuges der rotierenden Walze bis dicht an den Walzenkern ein rotierender Messerkopf herangeführt wird, der mehrere an einem Wendeplattenhalter montierte Schneidwerkzeuge aufweist und dieser Messerkopf an der rotierenden Walze entlanggeführt wird bis zum anderen Ende des Bezuges, wobei Umfangsgeschwindigkeiten der Schneidwerkzeuge von 15 bis 70 m/s zum Einsatz kommen.

2. Verfahren gemäß Anspruch 1, **dadurch gekennzeichnet, daß** Umfangsgeschwindigkeiten der Schneidwerkzeuge von 40 bis 50 m/s zum Einsatz kommen.

3. Verfahren gemäß Anspruch 1 oder 2, **dadurch gekennzeichnet, daß** die Schneidwerkzeuge für Elastomere über ca. 90 Shore A Drehstähle sind.

4. Verfahren gemäß Anspruch 1 oder 2, **dadurch gekennzeichnet, daß** die Schneidwerkzeuge für Elastomere bis ca. 90 Shore A Ringstähle sind.

5. Verfahren gemäß einem der Ansprüche 1 bis 4, **dadurch gekennzeichnet, daß** die auf dem Walzenkern verbliebenen Reste der elastomeren Bezüge mit einer oder mehreren nebeneinanderliegenden rotierenden Scheibenrundbürsten mit gezopften Stahldrähten entfernt werden, wobei diese Scheibenrundbürsten nach hinten versetzt aber gleichzeitig mit dem rotierenden Messerkopf an der rotierenden Walze entlanggeführt werden.

6. Verfahren gemäß einem der Ansprüche 1 bis 5, **dadurch gekennzeichnet, daß** die aus den elastomeren Bezügen durch Schneiden entstehenden Teilchen und der durch das Nachbürsten entstehende Staub abgesaugt werden.

7. Verfahren gemäß einem der Ansprüche 1 bis 6, **dadurch gekennzeichnet, daß** der rotierende Messerkopf nach Beendigung der Bearbeitung einer Walze die Bearbeitung der nächsten Walze in entgegengesetzter Richtung vornimmt.

8. Vorrichtung zur Durchführung des Verfahrens gemäß einem der Ansprüche 1 bis 7 bestehend aus
a) einer Werkzeugmaschine zum Einspannen und Rotieren der Walzen mit einem Support zum Vorschub und Anstellen des Schneidwerkzeugs.
b) einem rotierenden Messerkopf mit einem Wendeplattenhalter und einem eigenen Antrieb für den Messerkopf.

9. Vorrichtung gemäß Anspruch 8, **dadurch gekennzeichnet, daß** sie zusätzlich aufweist
c) einen weiteren Support zum Vorschub und zum Anstellen einer rotierenden Scheibenrundbürste mit einem eigenen Antrieb.

10. Vorrichtung gemäß Anspruch 8 oder 9, **dadurch gekennzeichnet, daß** sie zusätzlich aufweist
d) eine Absaugung für die durch das Schneiden entstehenden Teilchen und den durch das Nachbürsten entstehenden Staub.

11. Vorrichtung gemäß einem der Ansprüche 9 oder 10, **dadurch gekennzeichnet, daß** die rotierende Bürste mit eigenem Antrieb seitlich versetzbar ausgestaltet ist.

12. Vorrichtung gemäß einem der Ansprüche 9 bis 11, **dadurch gekennzeichnet, daß** die Scheibenrundbürste mit einer oder mehreren nebeneinander angeordneten Scheiben mit gezopften Stahldrähten ausgestattet ist.

13. Vorrichtung gemäß Anspruch 12, **dadurch gekennzeichnet, daß** die Zöpfe der Stahldrähte mit einem elastischen Kunststoff verklebt sind.

## Claims

1. A method for removing used elastomeric covers from rollers, **characterized in that** a rotating cutter head having a number of cutting tools mounted on an indexable insert holder is approached from one end of the cover of the rotating roller to close to the roller core, and said cutter head is moved along the rotating roller to the other end of the cover, the circumferential velocities of the cutting tools being from 15 to 70 m/s.

2. The method according to claim 1, **characterized in that** circumferential velocities of the cutting tools of from 40 to 50 m/s are used.

3. The method according to claim 1 or 2, **characterized in that** the cutting tools for elastomers of more than about 90 Shore A are turning tools.

4. The method according to claim 1 or 2, **characterized in that** the cutting tools for elastomers of up to about 90 Shore A are annular cutting tools.

5. The method according to any of claims 1 to 4, **characterized in that** the remnants of the elastomeric covers remaining on the roller core are removed with one or a number of juxtaposed rotating circular disk brushes with plaited steel wires wherein said circular disk brushes are moved along the rotating roller in a lagging position with respect to, but simultaneously with the rotating cutter head.

6. The method according to any of claims 1 to 5, **characterized in that** the particles formed from the elastomeric covers by cutting and the dust formed in the subsequent brushing are sucked off.

7. The method according to any of claims 1 to 6, **characterized in that** the rotating cutter head, after having completed the working of one roller, proceeds to work the next roller in the opposite direction.

8. A device for performing the method according to one of claims 1 to 7, consisting of:
a) a machine tool for clamping and rotating the rollers having a support for advancing and adjusting the cutting tool;
b) a rotating cutter head with an indexable insert holder and a drive of its own for said cutter head.

9. The device according to claim 8, **characterized by** additionally comprising
c) another support for advancing and adjusting a rotating circular disk brush with a drive of its own.

10. The device according to claim 8 or 9, **characterized by** additionally comprising
d) a sucking means for the particles formed by cutting and the dust formed in the subsequent brushing.

11. The device according to either of claims 9 or 10, **characterized in that** said rotating brush with a drive of its own is designed to be laterally displaceable.

12. The device according to any of claims 9 to 11, **characterized in that** said circular disk brush is equipped with one or a number of juxtaposed disks with plaited steel wires.

13. The device according to claim 12, **characterized in that** the plaits of said steel wires are conglutinated with an elastic plastic material.

## Revendications

1. Procédé permettant de retirer de cylindres des revêtements élastomères usagés, **caractérisé en ce qu'**un porte-lames rotatif muni de plusieurs outils de coupe montés sur une queue de plaquette réversible est ramené vers une extrémité du revêtement du cylindre rotatif jusqu'au noyau du cylindre et **en ce que** ce porte-lames suit le cylindre rotatif jusqu'à l'autre extrémité du revêtement, les vitesses circonférentielles des outils de coupe se situant entre 15 et 70 m/s.

2. Procédé selon la revendication 1, **caractérisé en ce que** les vitesses circonférentielles des outils de coupe se situent entre 40 et 50 m/s.

3. Procédé selon la revendication 1 ou 2, **caractérisé par le fait que** les outils de coupe utilisés pour les élastomères présentant une dureté Shore A supérieure à environ 90 sont des outils de tour.

4. Procédé selon la revendication 1 ou 2, **caractérisé en ce que** les outils de coupe utilisés pour les élastomères présentant une dureté Shore A jusqu'à environ 90 sont des outils circulaires.

5. Procédé selon l'une des revendications 1 à 4, **caractérisé en ce que** les résidus des revêtements élastomères se trouvant sur le noyau du cylindre sont éliminés à l'aide d'une ou plusieurs brosses circulaires rotatives à disques, placées les unes à côté des autres pourvues de fils d'acier tressés, ces brosses circulaires étant décalées vers l'arrière tout en suivant le cylindre rotatif avec le porte-lames rotatif.

6. Procédé selon l'une des revendications 1 à 5, **caractérisé en ce que** les particules produites par la découpe des revêtements élastomères et la poussière qui apparaît suite au brossage sont aspirées.

7. Procédé selon l'une des revendications 1 à 6, **caractérisé en ce qu'**après avoir terminé le façonnage d'un cylindre, le porte-lames rotatif réalise le façonnage du cylindre suivant dans le sens opposé.

8. Dispositif permettant de réaliser le procédé conformément à l'une des revendications 1 à 7, comprenant
a) une machine-outil permettant de serrer et de faire tourner les cylindres avec un support destiné à l'avancement et au réglage de l'outil de coupe.
b) un porte-lames rotatif avec une queue de plaquette réversible et une commande individuelle pour le porte-lames.

9. Dispositif selon la revendication 8, **caractérisé en ce qu'**il est également muni
c) d'un support supplémentaire destiné à l'avancement et au réglage d'une brosse circulaire rotative à disques avec une commande individuelle.

10. Dispositif selon la revendication 8 ou 9, **caractérisé en ce qu'**il est également muni
d) d'un système d'aspiration des particules produites par la découpe et de la poussière qui apparaît suite au brossage.

11. Dispositif selon l'une des revendications 9 ou 10, **caractérisé en ce que** la brosse rotative est conçue avec une commande individuelle tout en étant déplaçable latéralement.

12. Dispositif selon l'une des revendications 9 à 11, **caractérisé en ce que** la brosse circulaire à disques est munie d'un ou plusieurs disques disposés les uns à côté des autres, pourvus de fils d'acier.

13. Dispositif selon la revendication 12, **caractérisé en ce que** les extrémités des tresses des fils d'acier sont collées avec une matière plastique élastique.
